# EUROPÄISCHE PATENTSCHRIFT

(11) **EP 2 404 735 B1**
(45) Veröffentlichungstag und Bekanntmachung des Hinweises auf die Patenterteilung: **03.04.2013**
(21) Anmeldenummer: 11005627.2
(22) Anmeldetag: 08.07.2011
(51) Int. Cl.: B29C 47/90

(54) **Verfahren und Vorrichtung zum Anfahren einer Rohrextrusionslinie**
Method and device for starting a pipe extrusion line
Procédé et dispositif pour la conduite d'une ligne d'extrusion de tuyaux

(30) Priorität: 09.07.2010 DE 102010026731
(43) Veröffentlichungstag der Anmeldung: 11.01.2012
(73) Patentinhaber: INOEX GmbH, 32547 Bad Oeynhausen (DE)
(72) Erfinder: Klose, Reinhard, 31737 Rinteln (DE); Schmuhl, Jörg, Prof., Dr., 15711 Königs Wusterhausen (DE)
(74) Vertreter: Seewald, Jürgen

(56) Entgegenhaltungen:
- EP-A2- 1 923 199
- WO-A1-91/00798
- WO-A1-98/35814
- DE-U1- 20 221 671

## Beschreibung

Die vorliegende Erfindung betrifft ein Verfahren und eine Vorrichtung zum Anfahren einer Extrusionslinie gemäß dem Oberbegriff des Anspruchs 1 bzw. des Anspruchs 2.

Rohrextrusionslinien weisen einen Extruder mit einem Werkzeug, einem so genannten Rohrkopf, eine Kalibrier- und Kühleinheit und ggf, weitere Kühltanks sowie eine Abzugseinheit auf. Im normalen Betrieb wird das extrudierte Rohr von der Abzugseinheit, die meistens als Raupenabzug ausgebildet ist, mit der erforderlichen Geschwindigkeit durch die Extrusionslinie gezogen.

Beim Anfahren befindet sich in aller Regel kein Rohr in der Extrusionslinie. Es wird daher mit einem Anfahrrohr gearbeitet. Das Anfahrrohr muss vom hinteren Ende der Extrusionslinie durch alle Einrichtungen "hindurchgefädelt" werden, bis sein vorderes Ende aus der Kalibrier- und Kühleinheit ragt. Es kann dann mit dem aus dem Rohrkopf austretenden Schmelzeschlauch, z. B. durch Verschweißen, verbunden werden. Nach der Herstellung dieser Verbindung wird mit der Abzugseinheit Zug auf das Anfahrrohr ausgeübt, so dass letztendlich das mit dem Anfahrrohr verbundene, neu produzierte Rohr in die Abzugseinheit einläuft. Die Aufgabe des Anfahrrohrs ist damit erledigt.

Diese aus dem Stand der Technik bekannte Vorgehensweise hat einige Nachteile. So muss das Anfahrrohr möglichst den gleichen Durchmesser haben wie das zu produzierende Rohr, damit die Enddichtung der Kalibrier-und Kühleinheit, die gegen die Atmosphäre abdichtet, an dem Anfahrrohr anliegt und in der Kalibrier- und Kühleinheit sofort mit einem Unterdruck gearbeitet werden kann. Andernfalls würde sich der Ausschuss des neu produzierten Rohres erhöhen. Zudem sollten das produzierte Rohr und das Anfahrrohr möglichst aus dem gleichen Material bestehen, um die Schweißverbindung optimal herstellen zu können. Ein weiterer Nachteil beim Anfahren einer Extrusionslinie mit einem Anfahrrohr ist darin zu sehen, dass dieses von hinten in voller Länge durch die Extrusionslinie "gefädelt" werden muss. Dabei kann es zur Beschädigung von Anlagenteilen kommen. Des Weiteren ist dieser "Einfädelvorgang" bei großen Metergewichten des Anfahrrohrs im wahrsten Sinne des Wortes sehr beschwerlich.

Die o. g. Nachteile werden bei einem Anfahrsystem vermieden, dass in der DE 202 21 671 U1 offenbart ist. Bei diesem System wird mit einem so genannten Ankopplungskopf gearbeitet. Dieser ragt zum Anfahren der Extrusionslinie in Richtung Rohrkopf aus der Kalibrier- und Kühleinheit heraus. Der Ankopplungskopf besitzt einen zylindrischen Vorsprung, mit dem der aus dem Rohrkopf austretende Schmelzeschlauch z. B. durch Verschweißen oder durch Verklemmen verbunden werden kann. Der Ankopplungskopf ist mit einer Zugvorrichtung verbunden. Diese Zugvorrichtung weist z. B. ein Seil auf, das vom Ankopplungskopf durch die gesamte Extrusionslinie geführt und am hinteren Ende mit einer Winde verbunden ist. Nach dem Verbinden des aus dem Rohrkopf austretenden Schmelzeschlauchs mit dem Ankopplungskopf wird mittels der Zugvorrichtung Zug auf den Ankopplungskopf und damit auf das produzierte Rohr ausgeübt. Sobald der Ankopplungskopf die Abzugseinheit passiert hat, übernimmt diese den weiteren Abzug des hergestellten Rohres in der Rohrextrusionslinie.

Beim Anfahren wird in dem zwischen dem Rohrkopf und dem Ankopplungskopf befindlichen Innenraum des Schmelzeschlauchs durch Druckluftzufuhr ein Überdruck erzeugt. Da in der Kalibrier- und Kühleinheit noch Atmosphärendruck herrscht, wird der Schmelzeschlauch aufgrund der Druckdifferenz gegen eine Kalibriereinrichtung, z. B. eine Kalibrierhülse, gedrückt. Dadurch erhält das produzierte Rohr gleich zu Beginn den gewünschten Außendurchmesser, so dass der Ausschuss beim Anfahren reduziert werden kann. Nachdem der Ankopplungskopf eine am Auslauf der Kalibrier- und Kühleinheit angeordnete Dichtung passiert hat, legt sich diese selbsttätig oder zwangsgesteuert dichtend an das produzierte Rohr an, so dass in der Kalibrier- und Kühleinheit ein Vakuum erzeugt und die Druckluftzufuhr in den Innenraum des Schmelzeschlauchs abgestellt werden kann. Da nun weiterhin eine Druckdifferenz zwischen dem Rohrinnenraum und der Kalibrier-und Kühleinheit besteht, kann die Kalibrierung des Rohres ununterbrochen fortgesetzt werden.

Nachteilig an der in der DE 202 21 671 U1 beschriebenen Technik ist, dass weiterhin eine Verbindung zwischen dem aus dem Rohrkopf austretenden Schmelzeschlauch und dem Ankopplungskopf hergestellt werden muss. Des Weiteren ist dafür Sorge zu tragen, dass das Zugseil die Extrusionslinie ziemlich mittig durchläuft, um Verkantungen des Ankopplungskopfes zu vermeiden.

Die DE 10 2005 028 085 A1 beschreibt eine Vorrichtung zum Verbinden von zwei Rohrenden. Bei dieser Anfahrtechnik wird ebenfalls wieder mit einem Anfahrrohr gearbeitet, allerdings wird dieses in einem Ausführungsbeispiel nicht direkt mit dem Schmelzeschlauch verbunden, sondern über ein Gegenstück, um das der Schmelzeschlauch gelegt ist. Das Gegenstück ist über eine Zugöse und ein Seil mit einem Anschlagdorn verbunden, der über Spreizmittel im Anfahrrohr festlegbar ist.

In der WO 98/35814 A1 ist ein gattungsgemäßes Verfahren beschrieben, welches die oben beschriebenen Nachteile vermeidet. Dieses Verfahren dient dem Anfahren einer Rohrextrusionslinie mit einem Extruder, einer Kalibrier- und Kühleinheit und einer Abzugseinheit. Das extrudierte Rohr wird allein durch den vom Extruder erzeugten Extrusionsdruck durch die Extrusionslinie bis zur Abzugseinheit geschoben. Bei diesen Verfahren steht die Kalibrier- und Kühleinheit in einer ersten Anfahrphase, in der das Rohr eine Dichtung der Kalibrier- und Kühleinheit gegen die Atmosphäre noch nicht passiert hat, unter Atmosphärendruck. In einer zweiten Anfahrphase, in der das Rohr diese Dichtung passiert hat, wird die Kalibrier- und Kühleinheit unter Unterdruck gesetzt. Dieses Verfahren kommt also ohne Anfahrrohr oder andere Zugmittel für das extrudierte Rohr beim Anfahren aus. Allerdings wird in der WO 98/35814 A1 ausgeführt, dass es in einigen Anwendungsfällen sinnvoll sein kann, ein spezielles Anfahrmaterial für das Rohr zu nehmen, welches stabil gegen Hochtemperaturen ist. Alternativ oder zusätzlich dazu wird auch vorgeschlagen, ein Anfahrseil zu verwenden, wie oben beschrieben.

In der EP 1 923 199 A2 ist eine Vorrichtung zum Extrudieren von Hohlsträngen aus thermoplastischem Kunststoff offenbart, die ein Extrusionswerkzeug und eine auf das Extrusionswerkzeug axial zustellbare Kalibriereinrichtung mit radial verstellbaren, konischen Einlauf aufweist. Zwischen dem Extrusionswerkzeug und der Kalibriereinrichtung ist eine Formkammer zur Dimensionsbeeinflussung des aus einer Ringspaltdüse des Extrusionswerkzeugs austretenden heißen, noch formbaren Hohlstranges angeordnet. Die Formkammer weist einen koaxial zur Ringspaltdüse angeordneten, stationären oder axial und/oder radial verstellbaren Formstopfen auf, wobei der Formstopfen und/oder der Einlauf der Kalibriereinrichtung durch axiales und/oder radiales Verstellen relativ zueinander zwischen sich einen Ringspalt zur Änderung des Querschnitts und/oder der Wandstärke des aus der Ringspaltdüse austretenden Hohlstranges bilden.

Aufgabe der vorliegenden Erfindung ist es, ein weiteres Verfahren und eine weitere Vorrichtung zum Anfahren einer Rohrextrusionslinie zur Verfügung zu stellen, das bzw. die gänzlich ohne Zugmittel auskommt und damit deren Nachteile vermeidet.

Diese Aufgabe wird erfindungsgemäß mit einem Verfahren und einer Vorrichtung gelöst, welches bzw. welche die Merkmale des Anspruchs 1 bzw. 2 aufweist.

Bei dem erfindungsgemäßen Verfahren wird das extrudierte Rohr nicht mehr durch die Extrusionslinie gezogen, sondern geschoben, und das ganz allein unter Ausnutzung des vom Extruder erzeugten Extrusionsdruckes. Wenn das so durch die Extrusionslinie vorgetriebene Rohr die Abzugseinheit erreicht hat, übernimmt diese, wie im Normalbetrieb einer Extrusionslinie üblich, den weiteren Antrieb des extrudierten Rohres. Da die Kalibrier- und Kühleinheit in einer ersten Anfahrphase noch unter Atmosphärendruck steht, weil das vorgeschobene Rohr noch nicht an einer Dichtung anliegt, die die Kalibrier- und Kühleinheit durch Anlage an dem extrudierten Rohr gegenüber der Atmosphäre abdichtet, muss dafür Sorge getragen werden, dass das noch nicht starre Rohr in der Kalibrier- und Kühleinheit von innen gestützt wird, damit es nicht in sich zusammenfällt. Das wird dadurch erreicht, dass das Rohr durch eine mechanische Innenführung in Form eines Stützzylinders, der axial vom Rohrkopf des Extruders abragt und sich koaxial In die Kalibrierhülse der Kalibrier- und Kühleinheit hinein erstreckt, körperlich gestützt wird. Sobald das produzierte Rohr die Dichtung passiert hat, wird in der Kalibrier- und Kühleinheit ein Unterdruck erzeugt, so dass das Rohr auf den gewünschten Außendurchmesser kalibriert werden kann. Die Druckluftzufuhr bei der ersten Stützvariante wird gestoppt.

Weitere vorteilhafte Ausgestaltungen der Erfindung ergeben sich aus den Unteransprüchen.

Die Erfindung wird nachstehend anhand von Ausführungsbeispielen näher erläutert. In der dazugehörigen Zeichnung zeigt:
- Fig. 1: eine Extrusionslinie zur Herstellung von Kunststoffrohren mit ihren Hauptkomponenten in schematischer Darstellung,
- Fig. 2: einen schematischen Schnitt durch eine Kalibrier-und Kühleinheit zur Durchführung eines erfindungsgemäßen Anfahrvorganges in einer ersten Ausführungsform am Beginn des Durchlaufs eines Rohres durch die Kalibrier-und Kühleinheit,
- Fig. 3: eine Darstellung gemäß Fig. 2 in einem mittleren Stadium des Durchlaufs eines Rohres durch die Kalibrier-und Kühleinheit, und
- Fig. 4: eine Darstellung gemäß Fig. 2 nach dem Durchlauf eines Rohres durch die Kalibrier- und Kühleinheit,

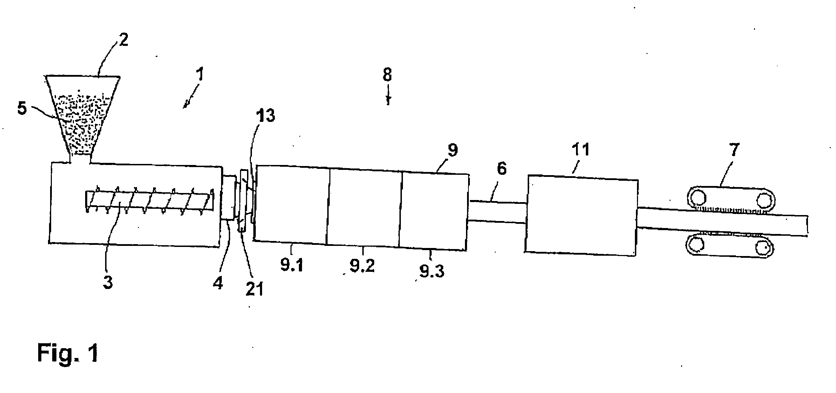

Die in Fig. 1 dargestellte Extrusionslinie umfasst einen Extruder 1 mit einem Aufgabetrichter 2, einer Extruderschnecke 3 und einem Rohrkopf 4. Ober den Aufgabetrichter 2 wird ein thermoplastischer Kunststoff 5 in Granulat- oder Pulverform dem Extruder 1 zugeführt, In dem Extruder 1 wird das Granulat bzw. Pulver erwärmt, geknetet und plastifiziert. Anschließend wird der Kunststoff als formbare Masse durch die Extruderschnecke in den Rohrkopf 4 gefördert und dort durch einen ringförmigen Durchtrittsspalt gedrückt.

Nach dem Austritt aus dem Rohrkopf 4 wird das heiße, noch verformbare Rohr (Schmelzeschlauch) 6 mittels einer am Ende der Extrusionslinie angeordneten Abzugseinheit 7 durch eine Kalibrier- und Kühleinheit 8 gezogen, die einen Vakuumtank 9 mit einer an dessem Einlauf angeordneten, perforierten Kalibrierhülse 10 aufweist. Die Kalibrierhülse 10 ist stufenlos im Durchmesser einstellbar, so dass das extrudierte, noch verformbare Rohr 6 auf den gewünschten Wert fixiert werden kann. Nach dem Verlassen der Kalibrier- und Kühleinheit 8 tritt das Rohr 6 in einen Kühltank 11 (oder auch mehrere) ein, in dem es auf etwa Raumtemperatur abgekühlt wird.

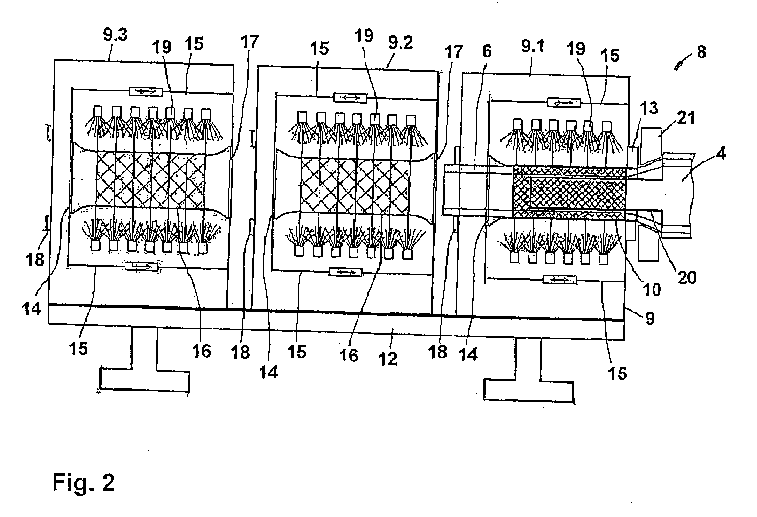

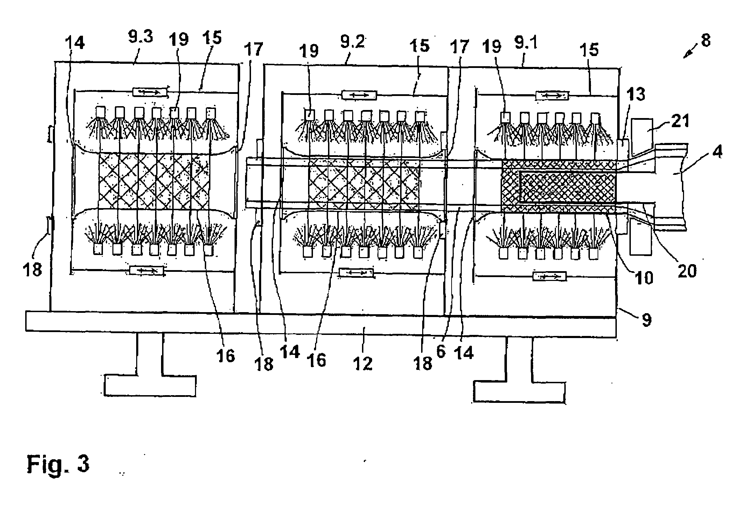

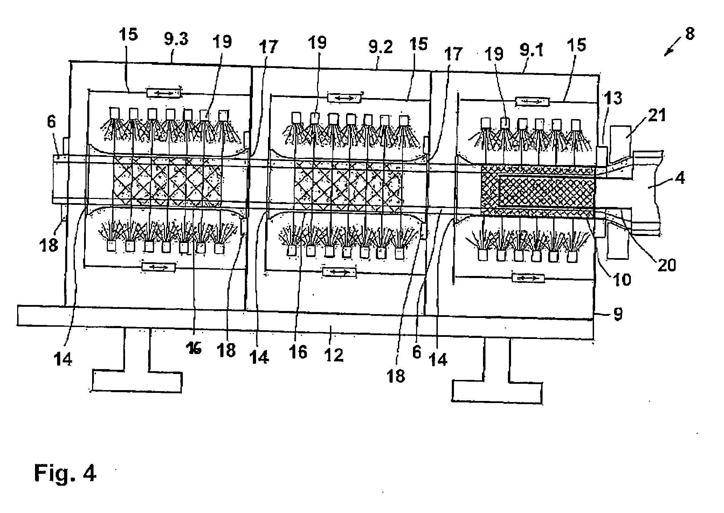

Die in einer ersten Ausführungsform der Erfindung in den Figuren 2 bis 5 dargestellte Kalibrier- und Kühleinheit 8 besitzt einen Vakuumtank 9, der aus drei Sektionen 9.1, 9.2 und 9.3 zusammengesetzt ist. Diese Sektion 9.1, 9.2 und 9.3 sind auf einem Bett 12 der Kalibrier- und Kühleinheit 8 gegeneinander verschiebbar, so dass sie voneinander beabstandet werden können, wie das in Figur 2 dargestellt ist.

In der ersten Sektion 9.1 der Kalibrier- und Kühleinheit 8 ist die Kalibrierhülse 10 angeordnet Diese besitzt einen ringförmigen Einlaufkopf 13 und einen ringförmigen Auslasskopf 14. Während der Einlaufkopf 13 außerhalb der Sektion 9.1 angeordnet ist, öffnet sich der Auslasskopf 14 in die Sektion 9.1. Der Auslaufkopf 14 ist gegenüber dem ortsfesten Einlaufkopf 12 in Axialrichtung der Kalibrierhülse 10 verlagerbar. Dazu sind zwei Spindeleinheiten 15 vorgesehen, mit deren Hilfe der Auslaufkopf 14 zu dem Einlaufkopf 13 hin bzw. weg verlagert werden kann, wodurch sich der Durchmesser der Kalibrierhülse 10 vergrößert bzw. verkleinert. Zum weiteren Aufbau der Kalibrierhülse 10 wird zwecks Vermeidung von Wiederholungen auf die DE 10 2005 002 820 B3 verwiesen, in der die Kalibrierhülse 10 und ihre Funktion ausführlich beschrieben ist.

In den Sektionen 9.2, 9.3 des Vakuumtanks 9 sind Stützvorrichtungen 16 für das extrudierte Rohr 6 vorgesehen, deren Aufbau im Wesentlichen dem der Kalibtierhülse 10 entspricht. Ein wesentlicher Unterschied zu der Kalibrierhülse 10 besteht darin, dass die Einlaufköpfe 17 wie die Auslaufköpfe 14 einen fixen Durchmesser haben. Zum weiteren Aufbau der Stützvorrichtungen 16 wird auf die DE 103 180 037 B3 verwiesen, in der diese Stützvorrichtungen 16 ausführlich beschrieben sind.

Am Auslauf jeder der Sektionen 9.1, 9.2 und 9.3 ist eine Dichtung 18 angeordnet, durch die das produzierte Rohr 6 hindurch läuft. Die Dichtungen 18 sind auf den Außendurchmesser des produzierten Rohres 6 einstellbar. Wenn die Dichtungen 18 am Außenumfang des produzierten Rohres 6 anliegen, dichten sie die Sektionen 9.1, 9.2 und 9.3 gegenüber der Atmosphäre ab.

Zu den Einbauten der Sektionen 9.1, 9.2 und 9.3 gehören weiterhin Sprühdüsen 19, mit denen zur Kühlung Wasser auf die Rohroberfläche gesprüht wird. Soweit es noch ergänzende Erläuterungen zum Aufbau und zur Funktion der Sprühdüse 19 bedarf, wird auf die DE 10 2008 037 874 A1 verwiesen, die zwecks weiterer Beschreibung der Sprühdüsen 19 zum Gegenstand des Ausführungsbeispiels gemacht wird.

Vom Rohrkopf 4 ragt axial ein Stützzylinder 20 ab, der sich durch den Einlaufkopf 13 hindurch koaxial in die Kalibrierhülse 10 hineinerstreckt. Konzentrisch zum Stützzylinder 20 ist eine Stützscheibe 21 angeordnet, die aus radial verstellbaren Segmenten besteht und den Abstand zwischen dem Rohrkopf 4 und dem Einlaufkopf 13 im Wesentlichen ausfüllt

Nachstehend wird anhand der Figuren 2 bis 4 der Anfahrvorgang einer Rohrextrusionslinie beschrieben.

Nach dem Austritt aus dem Rohrkopf 4 wird das heiße, noch verformbare Rohr 6 aufgrund des durch den Extruder 1 aufgebauten Extrusionsdruckes, außen von der Stützscheibe 21 geführt, in den Einlauf 13 der Kalibrierhülse 10 gedrückt, wo sich das Rohr 6 an die Außenfläche des Stützzylinders 20 anlegt. Für eine gute Gleitreibung ist der Stützzylinder 20 mit einer PTFE-Beschichtung versehen. Das Rohr 6 wird nun weiter auf dem Stützzylinder 20 durch die Kalibrierhülse 10 geschoben. Deren Innendurchmesser ist so eingestellt, dass ein geringfügiger Abstand zur Rohroberfläche besteht. Während des Durchlaufs des Rohres 6 durch den Vakuumtank 9 wird es in allen Sektionen 9.1, 9.2 und 9.3 durch die Sprühdüse 19 ständig gekühlt.

Sobald das Rohr 6 aus der Sektion 9.1 austritt, wird deren Dichtung 18 radial auf das Rohr 6 zugestellt, so dass die Dichtung 18 dichtend am Umfang des Rohres 6 anliegt. Gleichzeitig wird in der Sektion 9.1 ein Unterdruck erzeugt, so dass das Rohr 6 aufgrund der Druckdifferenz zwischen dem Rohrinnenraum und dem Innenraum der Sektion 9.1 an die Innenfläche der Kalibrierhülse 10 gedrückt wird.

Nach dem Schließen der Dichtung 18 der Sektion 9.1 wird die Sektion 9.2 an die Sektion 9.1 herangefahren. Das Rohr 6 durchläuft nun die Sektion 9.2 und wird beim Verlassen dieser Sektion 9.2 von der Dichtung 18 dichtend umschlossen. Nun wird auch in der Sektion 9.2 Unterdruck angelegt und die Sektion 9.3 an die Sektion 9.2 herangefahren. Das Rohr 6 durchläuft jetzt die Sektion 9.3, die nach dem Austritt des Rohres 6 und Schließen der Dichtung 18 ebenfalls unter Unterdruck gesetzt wird.

Das Rohr 6 wird nach dem Verlassen der Kalibrier-und Kühleinheit 8 durch die nachfolgenden Einrichtungen der Extrusionslinie geschoben, bis es die Abzugseinheit 7 erreicht. Diese übernimmt nun den weiteren Antrieb des Rohres 6.

Im oben stehenden Ausführungsbeispiel wurde der Stützzylinder 20 als stationäre Einrichtung beschrieben. Er kann vorteilhafter Weise auch so ausgeführt sein, dass er in den Rohrkopf 4 einfahrbar ist, da er nach dem Anfahren keine Funktion mehr hat.

In dem oben beschriebenen Ausführungsbeispiel sind die Sektionen 9.1, 9.2 und 9.3 des Vakuumtanks 9 gegeneinander verfahrbar, so dass sie voneinander beabstandet werden können. Diese Lösung hat den Vorteil, dass dadurch im Vakuumtank 9 Inspektionslücken geschaffen werden können, durch die das produzierte Rohr 6 bei seinem Durchlauf durch den Vakuumtank 9 beobachtet werden kann.

Für die vorliegende Erfindung ist eine derartige Verfahrbarkeit der Sektionen 9.1, 9.2 und 9.3 nicht erforderlich. Es reicht aus, wenn der Vakuumtank 9 schottartig in drei Sektionen unterteilt ist, wobei jeder Sektion am Auslauf eine Abdichtung 18 zugeordnet ist.

## Patentansprüche

1. Verfahren zum Anfahren einer Rohrextrusionslinie mit einem Extruder, einer Kalibrier- und Kühleinheit und einer Abzugseinheit, wobei das extrudierte Rohr (6) allein durch den vom Extruder (1) erzeugten Extrusionsdruck durch die Extrusionslinie bis zur Abzugseinheit (7) geschoben wird, die den weiteren Antrieb des Rohres (6) übernimmt, wobei die Kalibrier- und Kühleinheit (8) in einer ersten Anfahrphase, in der das Rohr (6) eine Dichtung der Kalibrier- und Kühleinheit (8) gegen die Atmosphäre noch nicht passiert hat, unter Atmosphärendruck steht, und in einer zweiten Anfahrphase, in der das Rohr (6) diese Dichtung passiert hat, unter Unterdruck gesetzt wird, **dadurch gekennzeichnet, dass** das Rohr (6) in der ersten Anfahrphase durch eine mechanische Innenführung in Form eines Stützzylinders (20), der axial von einem Rohrkopf (4) des Extruders (1) abragt und sich koaxial in die Kalibrierhülse (10) der Kalibrier- und Kühleinheit hinein erstreckt, gestützt wird.

2. Extrusionslinie zur Durchführung des Verfahrens gemäß Anspruch 1, **gekennzeichnet durch**:
- eine Kalibrier- und Kühleinheit (8), die mindestens zwei Sektionen (9.1, 9.2, 9.3) mit je einer Dichtung (18) aufweist, wobei in der in Extrusionsrichtung ersten Sektion (9.1) eine Kalibrierhülse (10) angeordnet ist,
- einen Stützzylinder (20), der axial von einem Rohrkopf (4) des Extruders (1) abragt und sich koaxial in die Kalibrierhülse (10) hineinerstreckt,
- eine Stützscheibe (21), die zwischen dem Rohrkopf (4) und einem Einlauf (13) der Kalibrierhülse (10) angeordnet ist, und der Außenabstützung des aus dem Rohrkopf (4) austretenden Rohres (6) dient.

3. Extrusionslinie nach Anspruch 2, **dadurch gekennzeichnet, dass** die Sektionen (9.1, 9.2, 9.3) gegeneinander auf Abstand verfahrbar sind.

4. Extrusionslinie nach Anspruch 2 oder 3, **dadurch gekennzeichnet, dass** der Stützzylinder (20) in den Rohrkopf (4) einfahrbar ist.

5. Extrusionslinie nach einem derAnsprüche 2 bis 4, **dadurch gekennzeichnet, dass** die Stützscheibe (21) aus radial verstellbaren Segmenten besteht.

## Claims

1. A process for starting a pipe extrusion line having an extruder, a calibration and cooling unit and a discharge unit, wherein the extruded pipe (6) is pushed through the extrusion line solely by the extrusion pressure generated by the extruder (1) until it reaches the discharge unit (7) which takes over the further driving of the pipe (6), wherein the calibration and cooling unit (8) is under atmospheric pressure in a first starting phase in which the pipe (6) has not yet passed a sealing of the calibration and cooling unit (8) with respect to the atmosphere, and is placed under negative pressure in a second starting phase in which the pipe (6) has passed this sealing, **characterised in that** the pipe (6) is supported in the first starting phase by a mechanical inner guide in the form of a support cylinder (20), which projects axially from a pipe head (4) of the extruder (1) and extends coaxially into the calibration sleeve (10) of the calibration and cooling unit.

2. An extrusion line for carrying out the process according to Claim 1,
**characterised by**;
- a calibration and cooling unit (8) which has at least two sections (9.1, 9.2, 9.3) having a respective seal (18), wherein a calibration sleeve (10) is arranged in the first section (9.1) as seen in the extrusion direction,
- a support cylinder (20) which projects axially from a pipe head (4) of the extruder (1) and extends coaxially into the calibration sleeve (10),
- a support plate (21) which is arranged between the pipe head (4) and an inlet (13) of the calibration sleeve (10) and serves as an outer support for the pipe (6) exiting the pipe head (4).

3. An extrusion line according to Claim 2, **characterised in that** the sections (9.1, 9.2, 9.3) can be moved such that they are at a spacing from one another.

4. An extrusion line according to Claim 2 or 3, **characterised in that** the support cylinder (20) can be moved into the pipe head (4).

5. An extrusion line according to one of Claims 2 to 4, **characterised in that** the support plate (21) comprises radially adjustable segments.

## Revendications

1. Procédé de démarrage d'une ligne d'extrusion de tube comportant une extrudeuse, une unité de calibrage et de refroidissement et une unité de tirage, le tube extrudé (6) étant poussé par la simple pression d'extrusion générée par l'extrudeuse (1) jusqu'à l'unité de tirage (7) qui assure la suite de l'entraînement du tube (6), l'unité de calibrage et de refroidissement (8) étant exposée à la pression atmosphérique pendant une première phase de démarrage, au cours de laquelle le tube (6) n'a pas encore passé un joint d'étanchéité contre l'atmosphère de l'unité de calibrage et de refroidissement (8), et à une dépression pendant une seconde phase de démarrage, au cours de laquelle le tube (6) a passé ce joint d'étanchéité, **caractérisé en ce qu'**au cours de la première phase, le tube (6) est étayé au moyen d'un guidage mécanique interne en forme de cylindre d'appui (20) qui fait saillie axialement depuis une tête de tube (4) de l'extrudeuse (1) et s'étend de façon coaxiale jusque dans la douille de calibrage (10) de l'unité de calibrage et de refroidissement.

2. Ligne d'extrusion destinée à l'exécution du procédé suivant la revendication 1, **caractérisée par** :
- une unité de calibrage et de refroidissement (8) qui présente au moins deux sections (9.1, 9.2, 9.3) avec respectivement un joint d'étanchéité (18), une douille de calibrage (10) étant disposée dans la première section (9.1) dans le sens de l'extrusion,
- un cylindre d'appui (20), qui fait saillie axialement depuis une tête de tube (4) de l'extrudeuse (1) et s'étend de façon coaxiale jusque dans la douille de calibrage (10),
- une rondelle d'appui (21) qui est disposée entre la tête de tube (4) et une entrée (13) de la douille de calibrage (10) et qui sert à l'appui externe du tube (6) sortant de la tête de tube (4).

3. Ligne d'extrusion suivant la revendication 2, **caractérisée en ce que** les sections (9.1, 9.2, 9.3) sont déplaçables avec un écart l'une par rapport à l'autre.

4. Ligne d'extrusion suivant la revendication 2 ou 3, **caractérisée en ce que** le cylindre d'appui (20) est déplaçable jusque dans la tête de tube (4).

5. Ligne d'extrusion suivant une des revendications 2 à 4, **caractérisée en ce que** la rondelle d'appui (21) est constituée de segments réglables radialement.
